# EUROPEAN PATENT SPECIFICATION

(11) **EP 4 207 027 B1**
(45) Date of publication and mention of the grant of the patent: **25.02.2026**
(21) Application number: 22212581.7
(22) Date of filing: 09.12.2022
(51) Int. Cl.: G06Q 20/20

(54) **INFORMATION PROCESSING SYSTEM AND INTERMEDIARY DEVICE**
INFORMATIONSVERARBEITUNGSSYSTEM UND ZWISCHENVORRICHTUNG
SYSTÈME DE TRAITEMENT D'INFORMATIONS ET DISPOSITIF INTERMÉDIAIRE

(30) Priority: 04.01.2022 JP 2022000226
(43) Date of publication of application: 05.07.2023
(73) Proprietor: Toshiba TEC Kabushiki Kaisha, Tokyo 141-8562 (JP)
(72) Inventor: Oe, Ryosuke, Shinagawa-ku, 141-8562 (JP)
(74) Representative: Bandpay & Greuter

(56) References cited:
- US-A1- 2002 065 727
- US-A1- 2016 323 380
- US-A1- 2018 315 035
- US-A1- 2021 383 343

## Description

### FIELD

Embodiments relate generally to an information processing system and an intermediary device for retail transaction processing computer systems.

### BACKGROUND

There is a transaction processing system in which an instruction from an operator is received by a terminal device at a store and information processing in response to the instruction is executed by the cloud. In such a system, information processing substantially similar to that which would otherwise occur in the cloud may be executed locally on a store server or the like so that transaction processing can be continued even with a cloud system failure.

However, in such cases, it is still necessary to synchronize processing results from the store server during the cloud failure with the cloud-based system after a failure recovery, and in such a synchronization process there the store's terminal devices might not be able to be operated normally until the synchronization process is completed.

It has been desired to be able to continue the operations of the terminal device during the cloud failure and the synchronization process after the failure recovery.

US 2016/323380 A1 discloses a system comprising POS terminals and a server. When network communication with the control server is interrupted, transaction data is accumulated by the POS terminals. When communication resumes, a synchronization with the server is performed.

### DISCLOSURE OF THE INVENTION

The invention is defined in the appended independent claims.

Advantageous embodiments are defined by the dependent claims.

### BRIEF DESCRIPTION OF THE DRAWINGS

Fig. 1 is a block diagram showing a schematic configuration of a point-of-sale (POS) system according to an embodiment.
Fig. 2 is a block diagram of a POS terminal.
Fig. 3 is a block diagram of a store server.
Fig. 4 is a block diagram of an edge gateway.
Fig. 5 is a flowchart of intermediary processing by a processor of an edge gateway.
Fig. 6 is a flowchart of intermediary processing by a processor of an edge gateway.
Fig. 7 is a system sequence diagram.

### DETAILED DESCRIPTION

An embodiment of the present disclosure provides an information processing system and an intermediary device as technological improvement on existing systems by providing for continuous operations of a terminal device so that retail transaction processing or the like can be maintained even during a cloud (or networking) failure and during any required system synchronization processing that must be performed after a failure recovery.

According to one embodiment, an information processing system includes a point-of-sale terminal configured to generate transaction data, a store server connected to the point-of-sale terminal by a first network and configured to receive the transaction data generated by the point-of-sale terminal and perform transaction processing based on the received transaction data, and an edge gateway. The edge gateway is connected to the first network and configured to receive the transaction data generated by the point-of-sale terminal. A cloud-based server that is connected to the edge gateway by a second network is also provided. The cloud-based server is configured to receive the transaction data from the edge gateway and perform transaction processing based on the received transaction data. The edge gateway is further configured to monitor a state of the second network; send the transaction data to the cloud-based server for transaction processing when the second network is operational; cause the store server to perform transaction processing when the second network is non-operational; and send the transaction data to the cloud-based server for transaction processing and cause the store server to perform transaction processing during a synchronization process after the second network becomes operational after being non-operational.

Hereinafter, an example embodiment will be described with reference to the drawings. In the example embodiment, a POS (point-of-sale) system including an on-premises (local) system will be described.

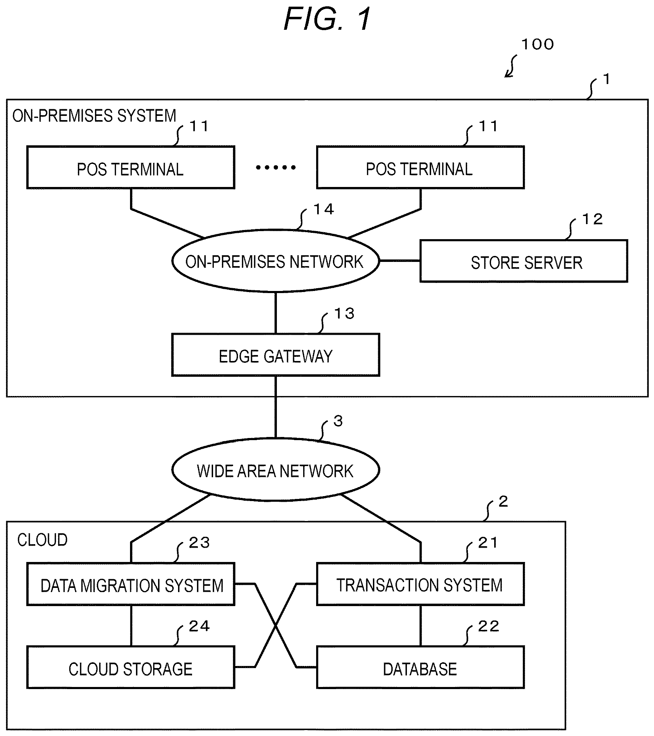

Fig. 1 is a block diagram showing a schematic configuration of a POS system 100 according to an embodiment.

The POS system 100 is configured so that an on-premises system 1 and a cloud system 2 ("cloud 2") can communicate with each other via a wide area network 3 (second network).

The on-premises system 1 is provided in an on-premises environment such as, for example, in a store. The cloud 2 provides an online service via the wide area network 3. As the wide area network 3, any communication network such as the Internet can be used. The wide area network 3 corresponds to a first communication network.

The on-premises system 1 is configured so that a plurality of POS terminals 11, a store server 12, and an edge gateway 13 can communicate with each other via an on-premises network 14 (first network). As the on-premises network 14, a LAN (local area network) or the like can be used. The on-premises network 14 corresponds to a second communication network.

The POS terminals 11 function as user interfaces for receiving input operations related to transaction processing by a clerk or a customer. The store server 12 performs information processing for transaction processing based on input operations from the POS terminals 11. The edge gateway 13 is an intermediary device for enabling transaction processing by cooperation of the POS terminal 11, the store server 12, and the cloud 2.

The cloud 2 (cloud-based or cloud-side system) includes a transaction system 21, a database 22, a data migration system 23, and a cloud storage 24.

The transaction system 21 performs information processing for transaction processing using transaction data transmitted from each POS terminal 11. The information processing performed by the transaction system 21 can be substantially the same as the information processing that would be performed by a store server 12 for an individual transaction. The database 22 is for collecting and storing information about past transactions performed by the transaction system 21. The data migration system 23 performs information processing for causing the transaction processing performed by the store server 12 during a failure of the cloud 2 to be reflected (included) in in the database 22. The cloud storage 24 is a storage system that provides an online storage service.

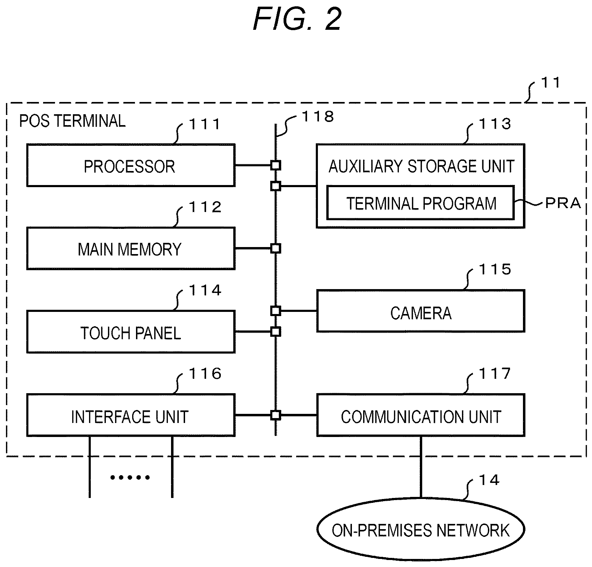

Fig. 2 is a block diagram of a POS terminal 11.

A POS terminal 11 includes a processor 111, a main memory 112, an auxiliary storage unit 113, a touch panel 114, a camera 115, an interface unit 116, a communication unit 117, a transmission line 118, and the like. As hardware of the POS terminal 11, a general-purpose tablet computer device or the like that can execute an application program (software) can be used. However, computer devices of other types, including information processing devices specially configured as a POS terminal 11 can also be used.

The processor 111, the main memory 112, the auxiliary storage unit 113, the touch panel 114, the camera 115, and the communication unit 117 can communicate with each other via the transmission line 118. Then, the processor 111, the main memory 112, and the auxiliary storage unit 113 are connected by the transmission line 118 to form a computer for controlling the POS terminal 11.

The processor 111 corresponds to a central portion of the computer. The processor 111 executes information processing based on an information processing program such as an operating system and an application program. The processor 111 is, for example, a CPU (central processing unit).

The main memory 112 corresponds to a main memory portion of the computer. The main memory 112 includes a non-volatile memory area and a volatile memory area. The main memory 112 stores the above information processing program in the non-volatile memory area. The main memory 112 may store data necessary for the processor 111 to execute information processing in the non-volatile or volatile memory area. The main memory 112 uses the volatile memory area as a work area where data is appropriately rewritten by the processor 111. The non-volatile memory area is, for example, a ROM (read only memory). The volatile memory area is, for example, a RAM (random access memory).

The auxiliary storage unit 113 corresponds to an auxiliary storage portion of the computer. As the auxiliary storage unit 113, a storage unit using a well-known storage device such as an EEPROM (electric erasable programmable read-only memory), an HDD (hard disc drive), or an SSD (solid state drive) can be used. The auxiliary storage unit 113 stores data used by the processor 111 to perform various processes, data generated by the processes of the processor 111, or the like. The auxiliary storage unit 113 may store the above information processing program. In the present embodiment, the auxiliary storage unit 113 stores a terminal program PRA. The terminal program PRA is an application program that describes a processing procedure for implementing a function as the POS terminal 11.

The touch panel 114 functions as an input device and a display device for the user interface.

The camera 115 includes an optical system and an image sensor, and the image sensor generates image data representing an image in the field of view formed by the optical system.

The interface unit 116 connects peripheral devices such as a handy scanner or a settlement terminal and enables the communication between these peripheral devices and the processor 111. As the interface unit 116, for example, an existing interface device for wired communication using a USB (universal serial bus) or the like, or wireless communication using a Bluetooth^{®} or the like can be used.

The communication unit 117 performs processing for data communication via the on-premises network 14. As the communication unit 117, for example, a well-known communication device compliant with a standard of the on-premises network 14 such as the IEEE 802.3 standard or the IEEE 802.11 standard can be used.

The transmission line 118 includes an address bus, a data bus, a control signal line, and the like, and transmits data and control signals exchanged between the connected parts.

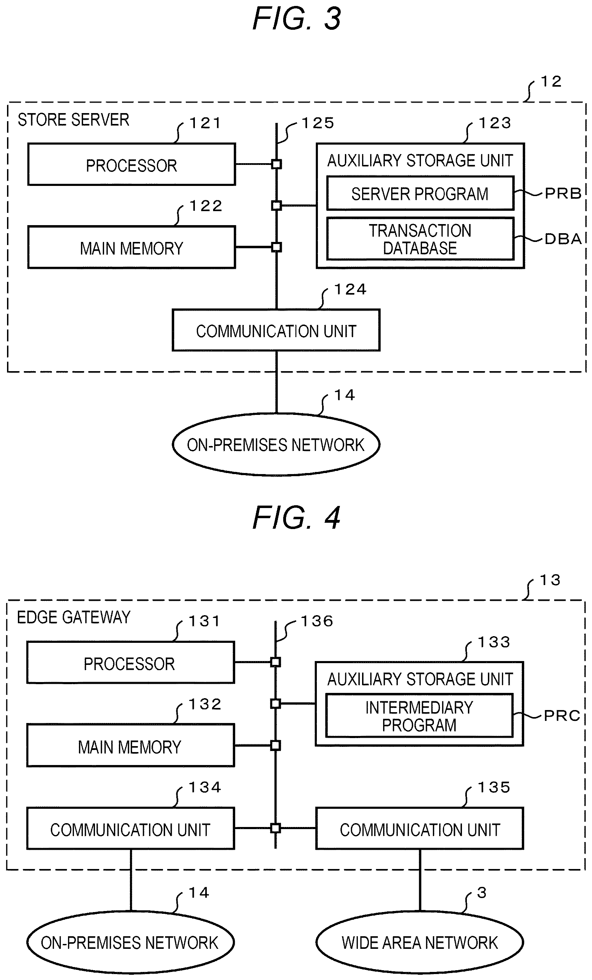

Fig. 3 is a block diagram of a store server 12.

A store server 12 includes a processor 121, a main memory 122, an auxiliary storage unit 123, a communication unit 124, and a transmission line 125. As hardware of the store server 12, a server device executing an application program (software) can be used.

The processor 121, the main memory 122, the auxiliary storage unit 123, and the communication unit 124 can communicate with each other via the transmission line 125. The processor 121 executes information processing based on an information processing program such as an operating system and/or an application program. The processor 121 is, for example, a CPU.

The main memory 122 includes a non-volatile memory area and a volatile memory area. The main memory 122 stores an information processing program in the non-volatile memory area, for example. The main memory 122 may also store data necessary for the processor 121 to execute information processing in the non-volatile or volatile memory area. The main memory 122 uses the volatile memory area as a work area where data can be appropriately rewritten by the processor 121. The non-volatile memory area is, for example, a ROM. The volatile memory area is, for example, a RAM.

As the auxiliary storage unit 123, storage devices such as an EEPROM, an HDD, or an SSD can be used. The auxiliary storage unit 123 stores data used by the processor 121 to perform various processes, data generated by the processes of the processor 121, or the like. The auxiliary storage unit 123 may store an information processing program. In the present embodiment, the auxiliary storage unit 123 stores a server program PRB. The server program PRB is an application program with instructions for implementing functions of the store server 12. A part of the storage area of the auxiliary storage unit 123 is used as a transaction database DBA. The transaction database DBA is for collecting and storing the results of information processing for transaction processing executed by the processor 121.

The communication unit 124 performs processing for data communication via the on-premises network 14. As the communication unit 124, a communication device compliant with a standard of the on-premises network 14 such as the IEEE 802.3 standard or the IEEE 802.11 standard can be used.

The transmission line 125 includes an address bus, a data bus, a control signal line, and the like, and transmits data and control signals exchanged between the connected parts.

Fig. 4 is a block diagram of an edge gateway 13.

An edge gateway 13 includes a processor 131, a main memory 132, an auxiliary storage unit 133, communication units 134 and 135, and a transmission line 136.

The processor 131, the main memory 132, the auxiliary storage unit 133, and the communication unit 134 can communicate with each other via the transmission line 136.

The processor 131 executes information processing based on an information processing program such as an operating system and/or an application program. The processor 131 is, for example, a CPU.

The main memory 132 includes a non-volatile memory area and a volatile memory area. The main memory 132 stores an information processing program in the non-volatile memory area. The main memory 132 may store data necessary for the processor 131 to execute information processing in the non-volatile or volatile memory area. The main memory 132 uses the volatile memory area as a work area where data is appropriately rewritten by the processor 131. The non-volatile memory area is, for example, a ROM. The volatile memory area is, for example, a RAM.

As the auxiliary storage unit 133, a storage device such as an EEPROM, an HDD, or an SSD can be used. The auxiliary storage unit 133 stores data used by the processor 131 to perform various processes, data generated by the processes of the processor 131, or the like. The auxiliary storage unit 133 may store an information processing program. In the present embodiment, the auxiliary storage unit 133 stores an intermediary program PRC. The intermediary program PRC is an application program that includes instructions for a processing procedure for implementing functions of the edge gateway 13.

The communication unit 134 performs processing for data communication via the on-premises network 14. As the communication unit 134, a communication device compliant with the standard of the on-premises network 14 such as the IEEE 802.3 standard or the IEEE 802.11 standard can be used.

The communication unit 135 performs processing for data communication via the wide area network 3. As the communication unit 135, a communication device compliant with a standard of the wide area network 3 such as the Internet can be used.

The transmission line 136 includes an address bus, a data bus, a control signal line, and the like, and transmits data and control signals exchanged between the connected parts.

The terminal program PRA, the server program PRB, and the intermediary program PRC may be stored in the auxiliary storage units 113, 123, and 133 at the time of initial transfer to an end-user or the like by storage therein before factory shipment of the POS terminal 11, the store server 12, and the edge gateway 13, or such programs may be transferred separately from the hardware of the POS terminal 11, the store server 12, and the edge gateway 13 may later be written to the auxiliary storage units 113, 123, and 133 according to the operation or selection of a system administrator or the like. When transferring programs separately from the hardware, such programs may be transferred on a removable recording medium such as a magnetic disk, a magnetooptical disk, an optical disk, or a semiconductor memory, or may be transferred via a network connection or otherwise.

Next, an operation of the POS system 100 will be described. The processes described below are examples, and it is possible to change the order of some processes, omit some processes, add other processes, and the like as appropriate.

An operator (user) of a POS terminal 11 performs an input operation to declare a start of a transaction-related process such as a registration of transaction content, a change of registered transaction content, or a settlement process by using, for example, a touch panel 114 or one of the peripheral devices connected to the interface unit 116. In response to the input operation, the processor 111 generates transaction data for transaction processing according to the particular operation and transmits the transaction data from the communication unit 117 to the on-premises network 14 with the edge gateway 13 as the destination. Processing of the processor 111 is performed based on the instructions of the terminal program PRA. Thus, when the processor 111 executes information processing based on the terminal program PRA, the computer having the processor 111 as the central portion functions as a generation unit. Further, a function as a first transmission unit is implemented by the cooperation between the processor 111 and the communication unit 117.

After the transaction data is transmitted to the edge gateway 13 by the on-premises network 14, the edge gateway 13 receives the transaction data by the communication unit 134. That is, the communication unit 134 has a function as a first receiving unit.

When the POS system 100 is to execute transaction processing, the processor 131 in the edge gateway 13 executes information processing (hereinafter, referred to as intermediary processing) based on the intermediary program PRC.

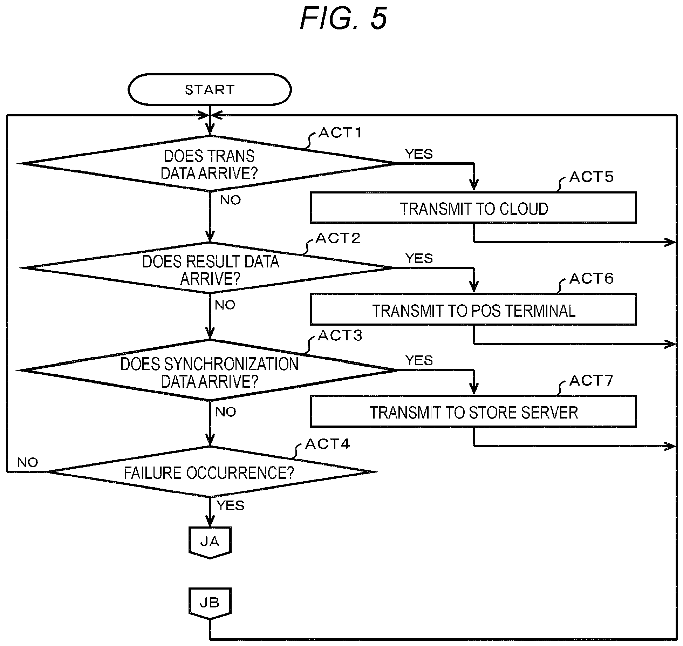

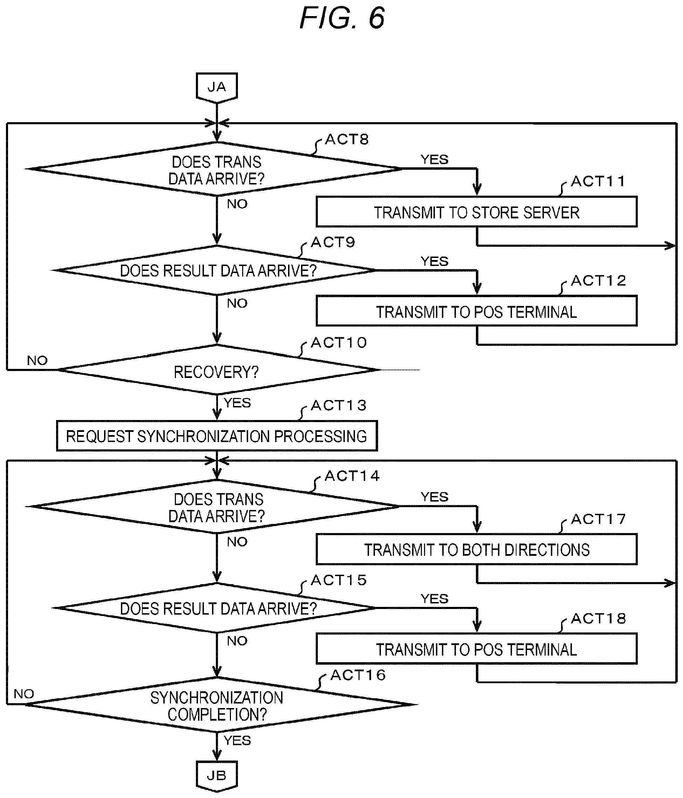

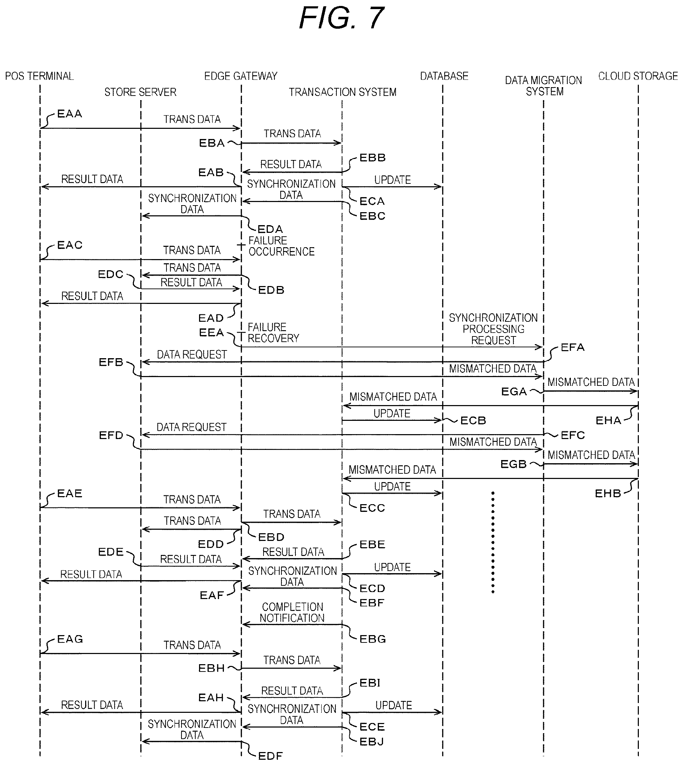

Figs. 5 and 6 are flowcharts of the intermediary processing by the processor 131. Fig. 7 is a sequence diagram for the POS system 100.

As ACT 1 in Fig. 5, the processor 131 checks whether or not transaction data (abbreviated as "trans data" in the drawing) arrives from the POS terminal 11. If not, the processor 131 determines NO and proceeds to ACT 2.

As ACT 2, the processor 131 checks whether or not result data (to be described later) arrives from the cloud 2. If not, the processor 131 determines NO and proceeds to ACT 3.

As ACT 3, the processor 131 checks whether or not the synchronization data (to be described later) arrives from the cloud 2. If not, the processor 131 determines NO and proceeds to ACT 4.

As ACT 4, the processor 131 checks whether or not a failure occurs in the cloud 2 (a cloud-side failure). If not, the processor 131 determines NO and returns to ACT 1.

Thus, the processor 131 waits for either transaction data, result data, or synchronization data to arrive or a failure to occur in ACT 1 to ACT 4.

When the transaction data transmitted from the POS terminal 11 is received by the communication unit 134, like the event EAA in Fig. 7, the processor 131 determines YES in ACT 1 and proceeds to ACT 5.

As ACT 5, the processor 131 transmits the just received transaction data to the cloud 2. For example, the processor 131 accesses the transaction system 21 via the wide area network 3 by a URL (uniform resource locator) predetermined for requesting transaction processing and then transmits transaction data from the communication unit 135 to the wide area network 3. Then, the processor 131 then returns to the standby state of ACT 1 to ACT 4. Thus, when the cloud 2 is normal, the processor 131 requests the cloud 2 to perform transaction processing related to any transaction data transmitted from the POS terminal 11. That is, when the processor 131 executes information processing based on the intermediary program PRC, the edge gateway 13 acts as a requesting unit that requests the cloud 2 to perform the information processing associated with the transaction data. The edge gateway 13 may also be said to function as a control unit that turns on (enables) the requesting unit (or the functions thereof) when the cloud is operating normal.

When the transaction data transmitted from the edge gateway 13 is transmitted by the wide area network 3 (see the event EBA in FIG. 7), the transaction system 21 receives the transaction data and performs transaction processing according to the transaction data. For example, if transaction data related to the start of new transaction processing arrives, the transaction system 21 determines a transaction code for identifying the transaction to be processed according to a predetermined rule and performs transaction processing such as generating commodity list data in association with transaction code. If transaction data related to an already on-going commodity registration transaction arrives, the transaction system 21 performs transaction processing such as updating the existing commodity list data associated with the transaction code and/or the number of commodities identified by a commodity code on the list. The transaction system 21 then transmits the result data for notifying the POS terminal 11 (e.g., for updating a user interface screen) according to the edge gateway 13 as the destination (see event EBB). Further, the transaction system 21 updates the database 22 to reflect the event ECA. Then, the transaction system 21 transmits synchronization data to the edge gateway 13 for synchronizing the update of the database 22 with the transaction database DBA of the store server 12 (see event EBC).

The result data and synchronization data transmitted in sequence to the edge gateway 13.

When the result data is received by the communication unit 135 of the edge gateway 13, the processor 131 determines YES in ACT 2 and proceeds to ACT 6.

As ACT 6, the processor 131 transmits the result data received by the communication unit 135 to the POS terminal 11 (via the on-premises network 14) (see event EAB). Then, the processor 131 returns to the standby state of ACT 1 to ACT 4.

The result data transmitted to the POS terminal 11 is received by the communication unit 117. in response to this, the processor 111 performs processing according to the received result data, such as updating the user interface screen displayed on the touch panel 114.

When synchronization data is received by the communication unit 135, the processor 131 determines YES in ACT 3 and proceeds to ACT 7.

As ACT 7, the processor 131 transmits the synchronization data received by the communication unit 135 to the store server 12 via the on-premises network 14 (see event EDA). Then, the processor 131 returns to the standby state of ACT 1 to ACT 4.

The synchronization data transmitted to the store server 12 via the on-premises network 14 is received by the communication unit 124. In response to this, the processor 121 updates the transaction database DBA to synchronize with the database 22 in the cloud 2.

At this time, since the cloud 2 is operational, the transaction processing is not performed by the store server 12, and the potential function of the store server 12 as a transaction processing unit is not enabled. The transaction database DBA stores any results of transaction processing that might have been performed by the processor 121 as a transaction processing unit. The database 22 stores any results of transaction processing performed in the cloud 2. When the processor 131 executes the information processing based on the intermediary program PRC, the edge gateway 13 functions as a first synchronization unit that synchronizes processing results performed in the cloud 2 with processing results performed by the store server 12.

The processor 131 in the edge gateway 13 monitors the operation state of the cloud 2, and if a cloud failure occurs, the processor 131 determines YES in ACT 4, and proceeds to ACT 8 in Fig. 6.

As ACT 8, the processor 131 checks whether or not transaction data arrives from a POS terminal 11. If not, the processor 131 determines NO and proceeds to ACT 9.

As ACT 9, the processor 131 checks whether or not result data arrives from the store server 12. If not, the processor 131 determines NO and proceeds to ACT 10.

As ACT 10, the processor 131 checks whether or not the failure of the cloud 2 has been recovered (i.e., cloud 2 is not operational again). If not, the processor 131 determines NO and returns to ACT 8.

Thus, the processor 131 waits for the transaction data or the result data to arrive or the failure to be recovered, as ACT 8 to ACT 10.

When the transaction data transmitted from the POS terminal 11 is received by the communication unit 134 (see event EAC), the processor 131 determines YES in ACT 8 and proceeds to ACT 11.

As ACT 11, the processor 131 transmits the received transaction data to the store server 12 (see event EDB). The processor 131 transmits transaction data to the store server 12 via the on-premises network 14. The processor 131 then returns to the standby state of ACT 8 to ACT 10. Thus, when a failure occurs in the cloud 2, the processor 131 of the edge gateway 13 requests the store server 12 to perform transaction processing associated with the transaction data transmitted from the POS terminal 11. That is, when the processor 131 executes information processing based on the intermediary program PRC, the edge gateway functions as a second transmission unit.

In the store server 12, when the transaction data is transmitted from the edge gateway 13 via the on-premises network 14 as described above, the communication unit 124 receives the transaction data. That is, the communication unit 124 has a function as a second receiving unit. Then, the processor 121 of the store server 12 performs transaction processing according to the received transaction data in substantially the same manner as would the transaction system 21 of the cloud 2. Here, the processor 121 generates result data for notifying the POS terminal 11 of the transaction processing results to permit user interface updates and the like in the same manner as the transaction system 21 would if the cloud 2 were operation. The store server 12 transmits the transaction processing result data to the edge gateway 13 via the on-premises network 14 (see event EDC). The processor 121 also updates the transaction database DBA to reflect the transaction processing. The operations of the store server 12 are implemented by the processor 121 executing information processing according to the server program PRB. In this way, the processor 121 executes the information processing substantially similar to that of the cloud 2, but in the on-premises (local) environment. The processor 131 executes information processing based on the intermediary program PRC to enable the processor 121 of the store server 12 to function as a stand-in for the cloud 2 systems during a cloud failure.

The result data transmitted to the edge gateway 13 via the on-premises network 14 is received by the communication unit 134.

When the result data is received by the communication unit 134, the processor 131 determines YES in ACT 9 and proceeds to ACT 12.

As ACT 12, the processor 131 transmits the received result data to the POS terminal 11 (see event EAD). And then, the processor 131 returns to the standby state of ACT 8 to ACT 10.

The result data transmitted to the POS terminal 11 by the on-premises network 14 is received by the communication unit 117. When the result data is received by the communication unit 117, the processor 111 performs processing according to the result data in the same manner regardless of whether the result data was originally transmitted from the transaction system 21 or from the store server 12.

Thus, even during the failure of the cloud 2, it is possible to seamlessly continue the transaction processing, and it is possible to normally continue the business of the store provided with the on-premises system 1. In many cases, several different pieces of transaction processing might be performed even during a failure of the cloud 2, and thus the transaction processing will be repeatedly performed by the store server 12.

The processor 131 in the edge gateway 13 continuously monitors the state of the cloud 2, and once the failure recovers, the processor 131 determines YES in ACT 10 and therefore proceeds to ACT 13.

As ACT 13, the processor 131 requests the cloud 2 to perform synchronization processing (see event EEA). For example, the processor 131 accesses the data migration system 23 via the wide area network 3 by a predetermined URL for requesting the synchronization processing and transmits the request to synchronize the database 22 with the transaction database DBA of the store server 12, from the communication unit 135 to the wide area network 3.

After receiving the synchronization request, the data migration system 23 determines if there is any difference between the database 22 (cloud side database) and the transaction database DBA (store side database). Thereafter any data necessary for eliminating the differences (hereinafter referred to as mismatched data) is requested from the store server 12 (see event EFA). Then, the data migration system 23 acquires the mismatched data sent from the store server 12 (see event EFB) in response to this synchronization request, and stores the mismatched data in the cloud storage 24 (see event EGA). After the mismatched data is stored in the cloud storage 24, the transaction system 21 reads the mismatched data from the cloud storage 24 (see event EHA). Then, based on the mismatched data, the database 22 is updated (see event ECB).

After that, like with events EFC, EFD, EGB, EHB, and ECC, the same sequence EFA, EFB, EGA, EHA, and ECB can be repeated as needed.

Requesting the synchronization processing in this way synchronizes the result of the transaction processing performed by processor 121 during the failure of the cloud 2 with the past processing result already stored in the cloud 2. Thus, when the processor 131 executes the information processing based on the intermediary program PRC, the edge gateway 13 functions as a second synchronization unit.

The differences between the database 22 and the transaction database DBA is caused by transaction processing being performed by the store server 12 during the failure of the cloud 2. Therefore, as the number of transactions processed by the store server 12 during the failure increases, the difference between the database 22 and the transaction database DBA increases, and as the number of times of repetitions of exchanging the mismatched data and updating the database 22 as described above increases, it will likely take some time for the synchronization to be completed.

The processor 131 in the edge gateway 13 proceeds to ACT 14 after requesting the synchronization processing in ACT 13.

As ACT 14, the processor 131 waits for transaction data to arrive from the POS terminal 11. If not, the processor 131 determines NO and proceeds to ACT 15.

As ACT 15, the processor 131 checks whether or not result data arrives from the store server 12. If not, the processor 131 determines NO and proceeds to ACT 16.

As ACT 16, the processor 131 checks whether or not the synchronization process is completed. If not, the processor 131 determines NO and returns to ACT 14.

Thus, the processor 131 waits for the transaction data or the result data to arrive or the synchronization processing to be completed as ACT 14 to ACT 16.

When the processor 131 is in the standby state of ACT 14 to ACT 16 and the communication unit 134 receives the transaction data transmitted from a POS terminal 11 (see event EAE), the processor 131 determines YES in ACT 14 and proceeds to ACT 17.

As ACT 17, the processor 131 transmits the transaction data received by the communication unit 134 to both the cloud 2 and the store server 12 (see events EBD and EDD). And then, the processor 131 returns to the standby state of ACT 14 to ACT 16. Thus, the processor 131 at this time requests both the cloud 2 and the store server 12 to perform transaction processing related to the transaction data transmitted from the POS terminal 11 during the period in which the synchronization processing is being performed. That is, when the processor 131 executes information processing based on the intermediary program PRC, the edge gateway 13 functions as a control unit that causes the store server 12 to continue to function as a transaction processing unit during the synchronization period immediately after recovery of the failure of the cloud 2. Furthermore, since the cloud 2 is functioning (accessible) during the synchronization period, the edge gateway 13 also functions as a requesting unit for requesting transaction processing by the cloud 2 system.

When the transaction system 21 receives the transaction data sent at event EBD, the transaction system 21 performs transaction processing as normal according to the transaction data. Then, the transaction system 21 transmits the result data for the transaction processing to the edge gateway 13 (see event EBE). Furthermore, the transaction system 21 updates the database 22 to reflect the result of the transaction processing (see event ECD). Then, the transaction system 21 transmits the synchronization data related to this update of the database 22 to the edge gateway 13 (see event EBF).

When the communication unit 124 receives the transaction data sent at event EDD, the processor 121 in the store server 12 performs transaction processing according to the transaction data. Then, the processor 121 transmits the result data for the transaction processing to the edge gateway 13 (see event EDE). The processor 121 also updates the transaction database DBA to reflect the results of this transaction processing.

The processor 131 in the edge gateway 13 does not wait for the arrival of result data or synchronization data from the transaction system 21 in the standby state of ACT 14 to ACT 16. Therefore, the processor 131 maintains the standby state of ACT 14 to ACT 16 even if result data or synchronization data sent from the transaction system 21 (at events EBE or EBF) are received by the communication unit 135. If the result data sent from the store server 12 at the event EDE is received by the communication unit 134, the processor 131 determines YES in ACT 15 and proceeds to ACT 18.

As ACT 18, the processor 131 transmits the result data received by the communication unit 134 to the POS terminal 11 (see event EAF). And then, the processor 131 returns to the standby state of ACT 14 to ACT 16.

The processor 111 in the POS terminal 11 performs processing according to the result data received by the communication unit 117.

As described above, transaction processing can be performed separately in the cloud 2 and the store server 12, but since transaction processing performed in the cloud 2 and the store server 12 are the same, in the updating of the database 22 (see event ECD) according to the transaction processing and the update of the transaction database DBA, there is no new difference between the database 22 and the transaction database DBA, and it does not affect the synchronization processing being executed.

Once the differences between the transaction database DBA in the database 22 are eliminated, the transaction system 21 transmits a notification data to edge gateway 13 (see event EBE). When the notification is transmitted to the edge gateway 13 via the wide area network 3, the notification data is received by the communication unit 135. In response to this, the processor 131 considers that the synchronization is completed, determines YES in ACT 16, and returns to the standby state of ACT 1 to ACT 4 in Fig. 4. That is, the processor 131 returns to the normal operating state.

Therefore, when transaction data is subsequently sent from the POS terminal 11 to the edge gateway 13 (see event EAG), since the processor 131 is now in the standby state of ACT 1 to ACT 4, the POS system 100 then operates in the same sequence as the events EBA, EBB, EAB, ECA, EBC, and EDA, like the events EBH, EBI, EAH, ECE, EBJ, and EDF.

As described above, the POS system 100 primarily performs transaction processing in the cloud 2. However, during the failure of the cloud 2, the POS system 100 performs transaction processing using the store server 12, that is, in the on-premises environment. Furthermore, the POS system 100 performs synchronization processing for reflecting the processing in the store server 12 that occurred during the failure in the cloud 2 as part of the recovery of the failure of the cloud 2. Then, the POS system 100 performs overlapping transaction processing in both the cloud 2 and the store server 12 during the execution of the synchronization processing . As a result, according to the POS system 100, it is possible to perform transaction processing when the cloud 2 is normal, during the failure of the cloud 2, and during synchronization processing that must occur after the failure recovery. Then, since the transaction processing during the execution of the synchronization processing is performed in both the cloud 2 and the store server 12, the on-going results of the transaction processing occurring during synchronization does not need to be a target for synchronization processing, and thus, it is possible to finish the synchronization processing in the minimum amount time without falling into a situation where the synchronization processing cannot be completed due to continuation of transaction processing operations.

The POS system 100 can selectively enter a state in which transaction processing is performed in the cloud 2, a state in which the transaction processing is performed in the store server 12, or a state in which the transaction processing is performed in both the cloud 2 and the store server 12 simply by switching the destination of the transaction data sent from the POS terminals 11 to either the transaction system 21, the store server 12, or both of them by operation of the edge gateway 13. As a result, it is not necessary to significantly change the POS terminals 11, the store server 12, and the transaction system 21, and this technological solution to problems with existing systems can be implemented with minor modifications to existing hardware and systems.

### Modifications

Transaction data may be transmitted from the POS terminal 11 as addressed to the transaction system 21 directly. In this case, for example, the processor 111 functions as a requesting unit. In such a case, whether or not the cloud 2 is normal may be monitored by the POS terminals 11 themselves, and when the cloud 2 is normal, transaction data may be transmitted to the transaction system 21. In this case, the processor 111 functions as a destination control unit. In some examples, whether or not the cloud 2 is normal may be monitored by the store server 12 or the edge gateway 13 instead of, or in addition to, the POS terminal 11. In such cases, the store server 12 or the edge gateway 13 may operate to control the POS terminal 11 to transmit transaction data directly to the transaction system 21 or not based on the detected state of the cloud 2. In this case, the processor 121 or the processor 131 would function as a destination control unit.

When transaction processing is to be performed in the store server 12, transaction data may be transmitted from the POS terminal 11 addressed to the store server 12. At this time, for example, the processor 111 may determine during the failure of the cloud 2 and the synchronization period, and transmit the transaction data addressed to the store server 12, or may transmit the transaction data addressed to the store server 12 under a control of the edge gateway 13.

In some examples, transaction processing may be performed by the POS terminal 11 or the edge gateway 13 instead of being performed by the store server 12 during the failure of the cloud 2 and during the synchronization period. In this case, the processor 111 or the processor 131 function as a processing unit. In such examples, the POS terminal 11 may monitor whether or not the cloud 2 is normal and execute transaction processing during the failure or during the synchronization period. In this case, the processor 111 functions as a destination control unit. Further, whether or not the cloud 2 is normal may be monitored by the store server 12 or the edge gateway 13, and the store server 12 or the edge gateway 13 may control the POS terminal 11 to perform transaction processing during the failure and during the synchronization period. In this case, the processor 121 or the processor 131 functions as a control unit.

If the transaction processing is performed by the POS terminal 11 or the edge gateway 13 during the failure of the cloud 2 and the synchronization period, the transaction database DBA may be stored in the auxiliary storage unit 113 or the auxiliary storage unit 133. If the transaction database DBA is stored in the auxiliary storage unit 113, the processor 131 may transmit the synchronization data to the POS terminal 11 in ACT 7, and the processor 111 may update the transaction database DBA in the POS terminal 11. If the transaction database DBA is stored in the auxiliary storage unit 133, the processor 131 may update the transaction database DBA in ACT 7.

In some examples, the POS terminal 11 may always transmit transaction data to the store server 12, which may transmit transaction data received from the POS terminal 11 to the transaction system 21 when the cloud 2 is normal. In this case, the processor 121 functions as a requesting unit and a control unit.

Information processing performed by a system such as POS system 100 is not limited to information processing for transaction processing and in other embodiments may be information processing of another type or related to another service.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. An information processing system, comprising:
a point-of-sale terminal (11) configured to generate transaction data;
a store server (12) connected to the point-of-sale terminal by a first network (14) and configured to receive the transaction data generated by the point-of-sale terminal and perform transaction processing based on the received transaction data;
an edge gateway (13) connected to the first network and configured to receive the transaction data generated by the point-of-sale terminal (11); and
a cloud-based server (2) connected to the edge gateway (13) by a second network (3) and configured to receive the transaction data from the edge gateway (13) and perform transaction processing based on the received transaction data, wherein
the edge gateway (13) is further configured to:
monitor a state of the second network (3),
send the transaction data to the cloud-based server for transaction processing when the second network is operational,
cause the store server (12) to perform transaction processing when the second network is non-operational, and
send the transaction data to the cloud-based server (2) for transaction processing and cause the store server to perform transaction processing during a synchronization process after the second network becomes operational after being non-operational, wherein
the store server (12) stores a transaction database, the cloud-based server (2) sends transaction processing results to the edge gateway via the second network (3) when the second network is operational,
the edge gateway forwards the received transaction processing results to the store server via the first network (14), and
the store server stores information corresponding to the transaction processing results in the transaction database.

2. The information processing system according to claim 1, wherein the first network is a local area network.

3. The information processing system according to claim 1 or 2, wherein the second network is a wide area network.

4. The information processing system according to any one of claim 1 to 3, wherein the store server stores information corresponding to transaction processing results for transaction processing performed by the store server.

5. The information processing system according to claim 4, wherein the synchronization process is a comparison of information stored in the transaction database of the store server to information indicating transaction processing results stored on the cloud-based server.

6. The information processing system according to any one of claims 1 to 5, wherein the edge gateway also forwards the received transaction processing results to the point-of-sale terminal via the first network.

7. The information processing system according to any one of claims 1 to 6, wherein the store server receives the transaction data from the edge gateway.

8. A method of operating a retail transaction processing system that includes a cloud-based server capable of performing transaction data processing, and a store server capable of storing a transaction database the method comprising:
monitoring a state of a wide area network connection between an edge gateway and a cloud-based server;
receiving transaction data generated by a point-of-sale terminal over a local area network connection;
sending the transaction data to the cloud-based server for transaction processing when the wide area network connection is operational;
causing a store server connected to the edge gateway over the local area network connection to perform transaction processing when the wide area network connection is non-operational;
sending the transaction data to the cloud-based server for transaction processing and causing the store server to perform transaction processing during a synchronization process after the wide area network connection becomes operational after being non-operational
sending transaction processing results to the edge gateway when the wide area network connection is operational,
forwarding the received transaction processing results to the store server via local area network connection, and
storing information corresponding to the transaction processing results in the transaction database.

9. The method according to claim 8, wherein the synchronization process is a comparison of information stored in a transaction database of the store server to information indicating transaction processing results stored on the cloud-based server.

## Patentansprüche

1. Informationsverarbeitungssystem, umfassend:
ein Verkaufsstellen-Terminal (11), das konfiguriert ist, um Transaktionsdaten zu erzeugen;
einen Geschäftsladen-Server (12), der über ein erstes Netz (14) mit dem Verkaufsstellen-Terminal verbunden und konfiguriert ist, um die von dem Verkaufsstellen-Terminal erzeugten Transaktionsdaten zu empfangen und eine Transaktionsverarbeitung basierend auf den empfangenen Transaktionsdaten durchzuführen;
ein Edge-Gateway (13), das mit dem ersten Netz verbunden und konfiguriert ist, um die von dem Verkaufsstellen-Terminal (11) erzeugten Transaktionsdaten zu empfangen; und
einen cloudbasierten Server (2), der über ein zweites Netz (3) mit dem Edge-Gateway (13) verbunden und konfiguriert ist, um die Transaktionsdaten von dem Edge-Gateway (13) zu empfangen und eine Transaktionsverarbeitung basierend auf den empfangenen Transaktionsdaten durchzuführen,
wobei das Edge-Gateway (13) ferner zu Folgendem konfiguriert ist:
Überwachen eines Zustand des zweiten Netzes (3),
Senden der Transaktionsdaten zur Transaktionsverarbeitung an den cloudbasierten Server, wenn das zweite Netz in Betrieb ist,
Veranlassen des Geschäftsladen-Servers (12), eine Transaktionsverarbeitung durchzuführen, wenn das zweite Netz nicht in Betrieb ist, und
Senden der Transaktionsdaten zur Transaktionsverarbeitung an den cloudbasierten Server (2) und Veranlassen, dass des Geschäftsladen-Servers, eine Transaktionsverarbeitung während eines Synchronisationsprozesses durchzuführen, sobald das zweite Netz betriebsbereit wird, nachdem es nicht betriebsbereit war, wobei
der Geschäftsladen-Server (12) eine Transaktionsdatenbank speichert, der cloudbasierte Server (2) Resultate der Transaktionsverarbeitung über das zweite Netz (3) an das Edge-Gateway sendet, wenn das zweite Netz in Betrieb ist,
das Edge-Gateway die empfangenen Resultate der Transaktionsverarbeitung über das erste Netz (14) an den Geschäftsladen-Server weiterleitet, und
der Geschäftsladen-Server Informationen in der Transaktionsdatenbank speichert, die den Resultaten der Transaktionsverarbeitung entsprechen.

2. Informationsverarbeitungssystem nach Anspruch 1, wobei das erste Netz ein lokales Netz ist.

3. Informationsverarbeitungssystem nach Anspruch 1 oder 2, wobei das zweite Netz ein Weitverkehrsnetz ist.

4. Informationsverarbeitungssystem nach einem der Ansprüche 1 bis 3, wobei der Geschäftsladen-Server Informationen speichert, die den Resultaten der Transaktionsverarbeitung für die von dem Geschäftsladen-Server durchgeführte Transaktionsverarbeitung entsprechen.

5. Informationsverarbeitungssystem nach Anspruch 4, wobei der Synchronisationsprozess ein Vergleich von Informationen, die in der Transaktionsdatenbank des Geschäftsladen-Servers gespeichert sind, mit Informationen ist, die Resultate der Transaktionsverarbeitung angeben anzeigen, die auf dem cloudbasierten Server gespeichert sind.

6. Informationsverarbeitungssystem nach einem der Ansprüche 1 bis 5, wobei das Edge-Gateway die empfangenen Resultate der Transaktionsverarbeitung auch über das erste Netz an das Verkaufsstellen-Terminal weiterleitet.

7. Informationsverarbeitungssystem nach einem der Ansprüche 1 bis 6, wobei der Geschäftsladen-Server die Transaktionsdaten von dem Edge-Gateway empfängt.

8. Verfahren zum Betreiben eines Einzelhandel-Transaktionsverarbeitungssystems, das einen wolkenbasierten Server, der in der Lage ist, Transaktionsdatenverarbeitung durchzuführen, und einen Geschäftsladen-Server, der in der Lage ist, eine Transaktionsdatenbank zu speichern, umfasst, das Verfahren umfassend:
Überwachen eines Zustands einer Weitverkehrsnetzverbindung zwischen einem Edge-Gateway und einem cloudbasierten Server;
Empfangen von Transaktionsdaten, die von einem Verkaufsstellen-Terminal über eine lokale Netzverbindung erzeugt werden;
Senden der Transaktionsdaten an den cloudbasierten Server zur Transaktionsverarbeitung, wenn die Weitverkehrsnetzverbindung in Betrieb ist;
Veranlassen, dass ein mit dem Edge-Gateway über die lokale Netzverbindung verbundener Geschäftsladen-Server die Transaktionsverarbeitung durchführt, wenn die Weitverkehrsnetzverbindung nicht in Betrieb ist;
Senden der Transaktionsdaten an den cloudbasierten Server zur Transaktionsverarbeitung und Veranlassen des Geschäftsladen-Servers, die Transaktionsverarbeitung während eines Synchronisationsprozesses durchzuführen, sobald die Weitverkehrsnetzverbindung wieder in Betrieb ist, nachdem sie nicht in Betrieb war;
Senden der Resultate der Transaktionsverarbeitung an das Edge-Gateway, wenn die Weitverkehrsnetzverbindung in Betrieb ist,
Weiterleiten der empfangenen Resultate der Transaktionsverarbeitung über eine lokale Netzverbindung an den Geschäftsladen-Server, und
Speichern von Informationen, die den Resultaten der Transaktionsverarbeitung entsprechen, in der Transaktionsdatenbank.

9. Verfahren nach Anspruch 8, wobei der Synchronisationsprozess ein Vergleich von Informationen, die in einer Transaktionsdatenbank des Geschäftsladen-Servers gespeichert sind, mit Informationen ist, die Resultate der Transaktionsverarbeitung angeben anzeigen, die auf dem cloudbasierten Server gespeichert sind.

## Revendications

1. Système de traitement d'informations, comprenant :
un terminal de point de vente (11) configuré pour générer des données de transaction ;
un serveur de magasin (12) connecté au terminal de point de vente par un premier réseau (14), et configuré pour recevoir les données de transaction générées par le terminal de point de vente et pour effectuer un traitement de transaction sur la base des données de transaction reçues ;
une passerelle périphérique (13) connectée au premier réseau et configurée pour recevoir les données de transaction générées par le terminal de point de vente (11) ; et
un serveur infonuagique (2) connecté à la passerelle périphérique (13) par un deuxième réseau (3), et configuré pour recevoir les données de transaction provenant de la passerelle périphérique (13) et pour effectuer le traitement de transaction sur la base des données de transaction reçues, dans lequel
la passerelle périphérique (13) est en outre configurée pour :
surveiller un état du deuxième réseau (3),
envoyer les données de transaction au serveur infonuagique en vue d'un traitement de transaction lorsque le deuxième réseau est opérationnel,
amener le serveur de magasin (12) à effectuer le traitement de transaction lorsque le deuxième réseau n'est pas opérationnel ; et
envoyer les données de transaction au serveur infonuagique (2) en vue du traitement de transaction, et amener le serveur de magasin à effectuer le traitement de transaction pendant un processus de synchronisation après que le deuxième réseau est redevenu opérationnel après avoir été non opérationnel, dans lequel
le serveur de magasin (12) stocke une base de données de transaction,
le serveur infonuagique (2) envoie les résultats de traitement de transaction à la passerelle périphérique par l'intermédiaire du deuxième réseau (3) lorsque le deuxième réseau est opérationnel,
la passerelle périphérique transmet les résultats de traitement de transaction reçus au serveur de magasin par l'intermédiaire du premier réseau (14), et
le serveur de magasin stocke des informations correspondant aux résultats de traitement de transaction dans la base de données de transaction.

2. Système de traitement d'informations selon la revendication 1, dans lequel le premier réseau est un réseau local.

3. Système de traitement d'informations selon la revendication 1 ou 2, dans lequel le deuxième réseau est un réseau étendu.

4. Système de traitement d'informations selon l'une quelconque des revendications 1 à 3, dans lequel le serveur de magasin stocke des informations correspondant aux résultats de traitement de transaction en vue d'un traitement de transaction effectué par le serveur de magasin.

5. Système de traitement d'informations selon la revendication 4, dans lequel le processus de synchronisation correspond à une comparaison des informations stockées dans la base de données de transaction du serveur de magasin aux informations indiquant les résultats de traitement de transaction stockées sur le serveur infonuagique.

6. Système de traitement d'informations selon l'une quelconque des revendications 1 à 5, dans lequel la passerelle périphérique transmet également les résultats de traitement de transaction reçus au terminal de point de vente par l'intermédiaire du premier réseau.

7. Système de traitement d'informations selon l'une quelconque des revendications 1 à 6, dans lequel le serveur de magasin reçoit les données de transaction provenant de la passerelle périphérique.

8. Procédé d'exploitation d'un système de traitement de transactions au détail qui comprend un serveur infonuagique en mesure d'effectuer un traitement de données de transaction, et un serveur de magasin en mesure de stocker une base de données de transaction, le procédé comprenant le fait de :
surveiller un état d'une connexion de réseau étendu entre une passerelle périphérique et un serveur infonuagique ;
recevoir des données de transaction générées par un terminal de point de vente par le biais d'une connexion de réseau local ;
envoyer les données de transaction au serveur infonuagique en vue d'un traitement de transaction lorsque la connexion de réseau étendu est opérationnelle ;
amener un serveur de magasin connecté à la passerelle périphérique par le biais de la connexion de réseau local à effectuer un traitement de transaction lorsque la connexion de réseau étendu n'est pas opérationnelle ;
envoyer les données de transaction au serveur infonuagique en vue du traitement de transaction, et amener le serveur de magasin à effectuer le traitement de transaction pendant un processus de synchronisation après que la connexion de réseau étendu est redevenue opérationnelle après avoir été non opérationnelle ;
envoyer des résultats de traitement de transaction à la passerelle périphérique lorsque la connexion de réseau étendu est opérationnelle,
transmettre les résultats de traitement de transaction reçus au serveur de magasin par l'intermédiaire de la connexion de réseau local, et
stocker des informations correspondant aux résultats de traitement de transaction dans la base de données de transaction.

9. Procédé selon la revendication 8, dans lequel le processus de synchronisation correspond à une comparaison des informations stockées dans la base de données de transaction du serveur de magasin aux informations indiquant les résultats de traitement de transaction stockées dans le serveur infonuagique.
